# FASCICULE DE BREVET EUROPEEN

(11) **EP 1 013 777 B1**
(45) Date de publication et mention de la délivrance du brevet: **24.03.2004**
(21) Numéro de dépôt: 99403254.8
(22) Date de dépôt: 22.12.1999
(51) Int. Cl.: C13K 1/10, A23L 1/236, A23L 1/09, A23G 1/00, A23G 3/00

(54) **Dextrose pulvérulent et son procédé de préparation**
Pulverförmige Dextrose und Verfahren zur Herstellung derselben
Powdered dextrose and method for preparing same

(30) Priorité: 24.12.1998 FR 9816454
(43) Date de publication de la demande: 28.06.2000
(73) Titulaire: Roquette Frères, 62136 Lestrem (FR)
(72) Inventeur: Moraly, Franck, 62136 Lestrem (FR); Labergerie, Erik, 59280 Armentieres (FR); Lis, José, 59253 La Gorgue (FR); Lefevre, Philippe, 59400 Merville (FR)
(74) Mandataire: Boulinguiez, Didier

(56) Documents cités:
- WO-A-94/28181
- BE-A- 431 954
- FR-A- 1 331 252
- FR-A- 2 398 802
- FR-A- 2 483 427

## Description

La présente invention a pour objet un dextrose pulvérulent de richesse élevée, de forme cristalline essentiellement α et de caractère anhydre prononcé, présentant par ailleurs, une vitesse rapide de dissolution dans l'eau, une granulométrie particulière et une excellente aptitude à l'écoulement. L'invention concerne également un dextrose pulvérulent dont les propriétés techniques d'utilisation en compression directe sont améliorées, ainsi qu'un procédé pour sa préparation.

Le dextrose, produit industriellement par hydrolyse de divers amidons, est d'usage courant, principalement en industrie alimentaire, depuis de nombreuses années.

Le dextrose pulvérulent est quant à lui avantageusement utilisé dans les applications pharmaceutique et alimentaire (notamment en confiserie), où il y a nécessité de disposer de produits secs, par exemple pour la fabrication de tablettes ou de comprimés, ou d'articles de chocolaterie.

Trois formes cristallines du dextrose sont classiquement décrites, i.e. le dextrose α monohydrate, le dextrose α anhydre et le dextrose β anhydre.

Bien que de nombreux procédés aient été proposés pour transformer directement des solutions de glucose en matières solides de toute forme cristalline, le dextrose α monohydrate reste la source quasi exclusive de dextrose poudre. Ce dextrose α monohydrate est classiquement produit par cristallisation lente, par refroidissement de sirops sursaturés et à forte teneur en glucose provenant de l'hydrolyse de l'amidon.

Ses principaux avantages sont son aptitude à l'écoulement et sa faible tendance à s'agglomérer, sa stabilité chimique ou physique lors de sa manutention, sa solubilité dans l'eau, sa blancheur et son caractère sucré sans goût anormal.

Cependant, sa teneur en eau d'environ 9 % sous forme d'eau de cristallisation empêche son utilisation dans les domaines d'applications où les problèmes relatifs à la teneur en humidité des produits finaux doivent être évités.

Le choix s'est alors porté sur le dextrose cristallin α anhydre, dextrose cristallin très pur ayant une faible teneur en eau.

Ce dextrose α anhydre est généralement produit par dissolution dans l'eau des cristaux de dextrose α monohydrate à des températures de 60 à 65°C, par exemple dans des autoclaves à vide poussé et dans des conditions opératoires soigneusement réglées.

Cependant, le dextrose α anhydre ainsi obtenu présente les inconvénients de se dissoudre relativement lentement dans l'eau et de présenter une tendance à la prise en masse au cours de sa dissolution. En effet, une partie du dextrose α anhydre se transforme, lors de cette dissolution, à nouveau en dextrose α monohydrate, qui s'agglomère et retarde d'autant la dissolution du dextrose α anhydre.

Il est donc nécessaire, pour dissoudre convenablement les deux formes α monohydrate et α anhydre, d'employer de l'eau à haute température ou d'ajouter progressivement le dextrose à l'eau sous agitation.

Il a donc été proposé d'utiliser un dextrose cristallin β anhydre qui présente une bien meilleure vitesse de dissolution, en comparaison à celle du dextrose a anhydre, voire même monohydrate.

Cependant, il est connu des spécialistes de la cristallisation du dextrose que si le point de transition de la cristallisation du dextrose α monohydrate en dextrose α anhydre est d'environ 55 °C, celui du dextrose α anhydre en dextrose β anhydre est d'environ 110 °C.

Il s'en suit que pour obtenir le dextrose β anhydre, il faut travailler à une température élevée, température à laquelle le dextrose n'est pas très stable. Ce résultat limite d'autant plus l'exploitation industrielle d'un tel procédé de cristallisation.

Par ailleurs, tout dextrose pulvérulent constitué d'une seule espèce cristalline et préparé classiquement étant généralement peu compressible, il est nécessaire de lui additionner des maltodextrines ou des polysaccharides pour la fabrication de tablettes ou de comprimés.

Cependant, les produits anhydres ainsi préparés conformément à l'art antérieur n'ont généralement pas donné satisfaction à cause des problèmes d'agglomération et de manutention générées par les maltodextrines ou polysaccharides.

La demande de brevet FR 2.398.802 décrit un dextrose pulvérulent qui possède une bonne aptitude à l'écoulement, qui ne s'agglomère pas, qui est sensiblement exempt de goût désagréable et d'impuretés colorées, mais possède également des propriétés satisfaisantes en compression.

L'analyse dudit dextrose pulvérulent révèle qu'il est constitué du mélange en quantités à peu près équivalentes de dextrose α et β anhydre. Son procédé d'obtention par cristallisation et granulation est cependant particulièrement long et fastidieux.

La demande de brevet WO 94/28.181 décrit un dextrose présentant outre une teneur en humidité particulièrement basse et une vitesse rapide de dissolution dans l'eau à température ambiante, des propriétés de compression qui autorisent son emploi pour la fabrication de tablettes sans qu'il ne soit nécessaire de lui faire subir de traitements particuliers supplémentaires ou de lui additionner un liant.

Cependant, le dextrose pulvérulent ainsi obtenu est caractérisé non seulement par une composition renfermant les deux formes cristallines α et β anhydres, avec une teneur élevée en dextrose β anhydre, de l'ordre de 60 % en poids, mais également par sa nature amorphe, i.e. un degré de cristallinité seulement compris entre 87 et 90 %. De plus sa richesse en dextrose n'est que de 94 %, les 6 % résiduels étant constitués principalement de maltose et de maltodextrines de degré de polymérisation (D.P.) supérieur.

De tout ce qui précède, il ressort qu'il existe un besoin non satisfait de disposer d'un dextrose pulvérulent de richesse élevée et de haute pureté cristalline et qui présente par ailleurs d'excellentes propriétés de compression.

La société Demanderesse a donc eu le mérite d'élaborer, au prix de nombreuses recherches, un nouveau dextrose pulvérulent.

Le dextrose pulvérulent conforme à l'invention est ainsi tout d'abord caractérisé en ce qu'il présente :
- une richesse en dextrose au moins égale à 99%,
- une teneur en forme cristalline α au moins égale à 95%,
- une teneur en eau au plus égale à 1%,
- une compressibilité, déterminée selon un test A, au moins égale à 80 N, de préférence comprise entre 100 et 200 N.

La teneur en dextrose peut être mesurée par une méthode classique de chromatographie en phase liquide à haute performance. Elle est ici déterminée à une valeur au moins égale à 99 %.

La cristallinité est une mesure de la structure cristalline ou non du produit. Cette cristallinité est déterminée après les mesures de la chaleur de fusion effectuées au moyen d'un calorimètre d'analyse différentielle. On détermine la cristallinité du produit en comparant la chaleur de fusion du produit avec celle de témoins cristallins ayant une proportion variable de dextrose α et β.

Le degré de cristallinité pour la forme a anhydre du dextrose pulvérulent conforme à l'invention est déterminé à une valeur au moins égale à 95 %. La forme dextrose β anhydre est donc en faible proportion, contrairement à ce que l'on peut trouver dans les produits anhydres du commerce qui présentent pourtant des propriétés de compression voisines.

On mesure également l'humidité des particules par des méthodes classiques connues par ailleurs de l'homme du métier. La teneur en eau dudit dextrose pulvérulent est ainsi au plus égale à 1%, indiquant un caractère anhydre prononcé.

La compressibilité du dextrose pulvérulent conforme à l'invention est déterminée par le test A suivant, décrit dans le brevet EP 220.103 dont la société Demanderesse est titulaire. Ce test A consiste à mesurer la force, exprimée en Newton, qui est représentative de la compressibilité du dextrose pulvérulent étudié . Cette force traduit donc ici la résistance à l'écrasement d'un comprimé qui est cylindrique à faces convexes (rayon de courbure de 14 mm), d'un diamètre de 13 mm, d'une épaisseur de 6 mm et d'un poids de 0,764 g, soit d'une masse volumique apparente de 1,3 g/ml.

Il est particulièrement surprenant qu'un dextrose pulvérulent puisse présenter conjointement une richesse élevée en dextrose, au moins égale à 99 %, dont la forme cristalline α anhydre représente au moins 95 % et une compressibilité d'au moins 80 N, de préférence entre 100 et 200 N.

En effet, il est admis très classiquement que la préparation d'un dextrose pulvérulent ayant des propriétés de compression élevée nécessite de mélanger du dextrose α monohydrate avec des adjuvants tels que le maltose et des maltodextrines de D.P. supérieur, ou de fabriquer des compositions mixtes de formes α et β anhydres du dextrose, par exemple par atomisation d'un sirop de glucose à haute matière sèche.

Or, le dextrose pulvérulent conforme à l'invention possède une compressibilité élevée, caractéristique desdits dextrose pulvérulents classiques, et une pureté cristalline élevée de forme α anhydre, caractéristique d'un dextrose cristallin de pureté élevée et de haute stabilité chimique.

De ce fait, et contrairement à ce que l'on attendait, il présente une compressibilité remarquablement élevée pour une pureté cristalline jamais atteinte par les dextrose pulvérulents de l'art antérieur.

A titre d'exemple, les dextrose pulvérulents commercialisés sous les marques EMDEX®, UNIDEX®, ROYAL T® et CANTAB® dans le domaine de la compression directe sont des produits sous forme monohydrate. Ils sont obtenus généralement par atomisation d'un sirop de glucose d'un dextrose équivalent (D.E.) de 93 à 99 %, comme il est spécifié dans l'annexe 3 de la monographie « Dextrates » du Handbook of Pharmaceutical Excipients.

Une analyse fine de leur composition révèle cependant entre 5 et 6 % de maltose, maltotriose et maltodextrines de D.P. supérieur.

Quant au dextrose pulvérulent commercialisé sous l'appellation « Dry Dextrose Anhydrous SD 99 » par la société CARGILL, qui présente d'excellentes propriétés de compression, en plus de ses deux formes cristallines α et β anhydres et un peu de forme α monohydrate contaminante, il présente une teneur en forme amorphe comprise entre 10 et 30 %. Il n'est en outre généralement pas conforme aux monographies « Dextrates » du Handbook of Pharmaceutical Excipients.

Le dextrose pulvérulent conforme à l'invention est particulièrement adapté à la fabrication de tablettes et de comprimés. En effet, la forme anhydre, caractéristique du dextrose pulvérulent conforme à l'invention, présente l'avantage d'éviter les fortes évolutions de dureté et de texture liées aux migrations d'eau générées elles-mêmes par des changements de température, i.e. par des périodes successives de chauffage / refroidissement.

Le dextrose pulvérulent conforme à l'invention présente aussi une richesse et une pureté élevées, ce qui confère par ailleurs aux comprimés préparés à partir dudit dextrose pulvérulent une meilleure texture pour l'application comprimés à mâcher, évitant le caractère « pâteux » des comprimés préparés à partir des dextrose pulvérulents de l'art antérieur.

Le dextrose pulvérulent conforme à l'invention peut également être caractérisé par sa vitesse rapide de dissolution dans l'eau.

Pour mesurer la vitesse de dissolution, on introduit dans 150 ml d'eau déminéralisée et dégazée, maintenue à 20°C et soumise à une agitation à 200 t/min, 5g exactement du produit à tester.

Le temps de dissolution correspond au temps nécessaire, après introduction du produit, pour obtenir une parfaite limpidité visuelle de la suspension ainsi préparée.

Dans ces conditions, le dextrose pulvérulent conforme à l'invention possède en général une vitesse de dissolution inférieure à 10 s. Il présente avantageusement un temps de dissolution de 6 s environ.

Ces temps sont généralement très inférieurs à ceux obtenus avec toutes les poudres de dextrose actuellement commercialisées.

Le dextrose pulvérulent conforme à l'invention peut également être caractérisé par sa densité apparente et sa friabilité.

La détermination de la densité apparente est réalisée par l'utilisation d'un appareil commercialisé par la société HOSOKAWA sous la marque POWDER TESTER en appliquant la méthode recommandée pour mesurer une densité apparente.

Dans ces conditions, le dextrose pulvérulent conforme à l'invention présente une densité apparente relativement faible, généralement comprise entre 0,5 et 0,7 g/ml, de préférence comprise entre 0,55 et 0,65 g/ml.

La friabilité dudit dextrose pulvérulent est quant à elle déterminée selon un test décrit dans le brevet EP 645.096 dont la société Demanderesse est titulaire.

Elle présente une valeur généralement au moins égale à 60, de préférence comprise entre 60 et 80.

Cette faible valeur de friabilité est d'autant plus remarquable que le dextrose pulvérulent conforme à l'invention présente une faible densité. En effet, il est classiquement admis qu'un dextrose pulvérulent est d'autant moins friable que sa densité et sa compressibilité sont plus élevées.

De manière surprenante et inattendue, et contrairement à ce qui est communément admis, le dextrose pulvérulent conforme à l'invention ne vérifie pas la règle selon laquelle plus la densité apparente d'un dextrose pulvérulent est faible, plus celui-ci devient friable, c'est à dire sensible à une altération de sa granulométrie par action mécanique.

Les propriétés améliorées de compressibilité et de friabilité combinées ont notamment pour conséquence de rendre le dextrose pulvérulent conforme à l'invention particulièrement bien adaptées aux applications alimentaire et pharmaceutique.

La compressibilité élevée dudit dextrose pulvérulent permet en effet la production, par simple compression directe, de comprimés de dureté élevée (pour l'application comprimés à sucer) ou de comprimés de dureté moyenne (pour l'application comprimés à croquer).

Par ailleurs, on peut également caractériser le dextrose pulvérulent conforme à l'invention par son diamètre moyen et par son aptitude à l'écoulement, ces propriétés convenant particulièrement auxdites applications en compression.

Ainsi, le dextrose pulvérulent conforme à l'invention présente généralement un diamètre moyen compris entre 150 et 200 µm. Ces valeurs sont déterminées sur un granulomètre LASER LS de marque COULTER®.

L'aptitude à l'écoulement dudit dextrose est évaluée en utilisant l'appareil POWDER TESTER commercialisé par la société HOSOKAWA. Cet appareil permet de mesurer, dans des conditions standardisées et reproductibles, l'aptitude à l'écoulement d'une poudre et de calculer une note d'écoulement, encore appelée indice de Carr. Le dextrose pulvérulent conforme à l'invention présente une note d'écoulement excellente, généralement d'au moins 70, de préférence comprise entre 70 et 80. Cette valeur est généralement équivalente à celle des poudres de dextrose de l'art antérieur. Ceci est d'autant plus remarquable que par rapport aux produits antérieurs de même écoulement, le dextrose pulvérulent conforme à l'invention présente une plus fine granulométrie.

Sans vouloir être lié par une quelconque théorie, on peut penser que les caractéristiques physico-chimiques précédemment citées du dextrose pulvérulent conforme à l'invention expliquent son excellente aptitude à l'écoulement. Ces caractéristiques concernent en particulier sa richesse en dextrose, sa pureté cristalline, sa granulométrie centrée mais également la forme caractéristique de ses particules.

Le dextrose pulvérulent est susceptible d'être obtenu en procédant à une étape de granulation d'un dextrose poudre, de forme cristalline essentiellement α, par voie humide à l'aide d'un liant, puis à une étape de maturation par séchage du dextrose granulé ainsi obtenu. Il est à préciser que, comme l'a constaté la société Demanderesse, le produit conforme à l'invention ne peut pas être préparé à partir d'une solution de glucose par simple atomisation, cristallisation ou granulation, car dans ce cas les propriétés remarquables de compressibilité ne peuvent être en fait obtenues que par addition d'adjuvants, comme il a été précisé plus haut.

Pour obtenir un dextrose pulvérulent conforme à l'invention possédant les caractéristiques fonctionnelles énoncées, la société Demanderesse a constaté qu'il convenait de choisir comme dextrose de départ un dextrose poudre de richesse élevée et de forme cristalline essentiellement α, pouvant être obtenu par cristallisation ou atomisation.

Par « forme cristalline essentiellement α », on entend un dextrose poudre dont la forme cristalline α représente au moins 95 % des formes cristallines sous laquelle le dextrose peut se présenter. La richesse élevée en dextrose s'entend ici à une valeur au moins égale à 99 %.

La granulométrie dudit dextrose poudre de départ ne constitue pas en soi un facteur limitant pour produire un dextrose pulvérulent conforme à l'invention.

Le liant est quant à lui constitué d'eau ou d'un sirop de glucose d'une matière sèche au moins égale à 30 %, de préférence comprise entre 40 et 80 %. La fraction de matière sèche apportée par le liant donnant au maximum, lors de sa recristallisation, 63 % de forme β anhydre et 37 % de forme α anhydre, la concentration en glucose du liant est choisie de manière à maintenir le taux de forme β anhydre du produit final à une valeur inférieure à 5 %.

De manière surprenante et inattendue, la société Demanderesse a constaté que la granulation d'un dextrose poudre par voie humide à l'aide d'un liant permet de préparer avec un haut rendement un produit conforme à l'invention sur le plan de son hygroscopicité, de sa densité, de sa granulométrie et de son aptitude à l'écoulement. En effet, les procédés décrits antérieurement ne permettent pas d'obtenir l'ensemble des caractéristiques souhaitées.

Pour procéder à la granulation, on peut employer par exemple un mélangeur-granulateur continu de type FLEXOMIX vertical commercialisé par la société SCHUGI, ou de type CB horizontal commercialisé par la société LÖDIGE dans lequel on introduit, via un doseur pondéral, le dextrose poudre de départ à granuler en continu et via un doseur volumétrique, le liant (de l'eau ou un sirop de glucose) en continu.

La granulation peut également s'effectuer dans une tour d'atomisation, ou dans un granulateur à lit fluidisé. Dans un premier mode préférentiel de réalisation du procédé de préparation d'un dextrose pulvérulent conforme à l'invention, on choisit d'utiliser un mélangeur-granulateur continu de type FLEXOMIX vertical SCHUGI. La poudre de dextrose de départ et le liant sont très intimement mélangés dans le mélangeur-granulateur équipé d'un axe avec couteaux disposés en pales, et d'un système de pulvérisation de liquides par buses d'injection.

Selon un mode préférentiel du procédé conforme à l'invention, la bonne dispersion des constituants et l'agglomération des particules de la poudre de dextrose de départ sont réalisées par agitation à grande vitesse, i.e. d'une valeur au moins égale à 1500 tpm, de préférence au moins égale à 3000 tpm. A la sortie du mélangeur-granulateur, les granulés formés sont déchargés en continu sur un séchoir.

Le déchargement se fait préférentiellement par gravité dans le cas dudit granulateur vertical, et par poussée, via l'axe des couteaux rotatifs, si le granulateur horizontal est utilisé.

Cette deuxième étape de séchage en sortie du mélangeur-granulateur permet d'éliminer l'eau provenant du liant et de cristalliser la matière sèche provenant du liant, dans le cas où un sirop de glucose a été éventuellement mis en oeuvre, de manière à ce que la cristallisation se produise après l'étape préalable de granulation.

Le séchage est réalisé en deux étapes successives. La première étape permet d'amener la teneur en eau de la poudre granulée humide obtenue en sortie du mélangeur - granulateur à une valeur comprise entre 7 et 9% et la seconde étape de séchage permet d'abaisser la teneur en eau à une valeur au plus égale à 1 %, de manière à obtenir le dextrose pulvérulent conforme à l'invention.

Le séchoir mis en oeuvre dans la première étape de séchage peut être par exemple constitué par un séchoir à lit fluidisé.

Le séchoir mis en oeuvre dans la seconde étape de séchage est un tambour rotatif ou une étuve sous vide, comme il sera exemplifié ci-après.

Le dextrose pulvérulent conforme à l'invention est obtenu après refroidissement et éventuellement tamisage. Dans ce cas, les fines particules peuvent être directement recyclées en tête de granulation, et les grosses particules être broyées et recyclées en tête de tamisage ou en tête de granulation.

Dans un second mode de réalisation préférentiel du procédé de préparation d'un dextrose pulvérulent conforme l'invention, on choisit de réaliser la granulation du dextrose poudre par voie humide en tour d'atomisation. On introduit alors du dextrose cristallisé dans ladite tour d'atomisation et ajoute comme liant de l'eau ou un sirop de glucose tel que précédemment défini.

On choisit d'alimenter une tour d'atomisation MSD (Multi-Stage Dryer) de capacité d'évaporation d'eau de l'ordre de 350 kg/h avec du dextrose poudre à un débit compris entre 400 et 600 kg/h, la granulation se faisant avec de l'eau comme liant, comme il sera exemplifié ci-après.

Au vu des points de fusion des différentes formes cristallines du dextrose, la société Demanderesse a trouvé qu'il fallait gérer avec rigueur le suivi des températures de fonctionnement de la tour d'atomisation.

On choisit donc avantageusement de régler la température de l'air d'alimentation à une valeur comprise entre 180 et 200°C, la température des buées à une valeur comprise entre 90 et 95°C et la température du lit statique à une valeur comprise entre 70 et 80°C.

Le dextrose pulvérulent conforme à l'invention peut être avantageusement employé, en raison de ses propriétés fonctionnelles mentionnées plus haut, comme agent édulcorant ou excipient dans des compositions utilisées en particulier dans les domaines alimentaire et pharmaceutique. Plus particulièrement, ledit dextrose pulvérulent peut être employé avantageusement dans le secteur de la confiserie, notamment en chocolaterie. En outre, certaines propriétés avantageuses dudit dextrose pulvérulent favorisent son utilisation dans des applications comprimés à sucer, à mâcher, à dissoudre et à avaler.

D'autres caractéristiques et avantages de l'invention apparaîtront à la lecture des exemples qui suivent. Ils ne sont toutefois donnés ici qu'à titre illustratif et non limitatif.

### EXEMPLE 1.

On alimente un mélangeur-granulateur FLEXOMIX vertical SCHUGI en continu via un doseur poudre, à un débit de 500 kg/h, avec un dextrose poudre fabriqué par cristallisation. D'autre part, on alimente le mélangeur-granulateur en continu avec de l'eau à 65°C et à un débit de 50 l/h, via une buse de pulvérisation. L'axe rotatif à couteaux est préalablement réglé à la vitesse de 3000 tpm.

La poudre granulée humide d'une teneur en eau égale à 14% obtenue en sortie du mélangeur-granulateur tombe en continu, par gravité, dans un séchoir à lit fluidisé SCHUGI à deux compartiments. Dans le premier compartiment, le produit granulé est séché par de l'air à 120°C, puis il est refroidi par de l'air à 20°C dans le deuxième compartiment de manière à être amené à une teneur en eau de 8,5%. Le produit ainsi obtenu est alors séché dans un tambour rotatif par de l'air à 120°C et refroidi à 20°C pour être amené à une teneur en eau finale de 0,5%. Le produit granulé, séché et refroidi est ensuite tamisé en continu sur un tamis rotatif équipé de deux toiles métalliques de 120 et 600 µm. Le dextrose poudre de départ A et le dextrose pulvérulent B ainsi obtenu et conforme à l'invention présentent les caractéristiques rassemblées dans le tableau I suivant.

**Tableau I**

| Paramètres | A | B |
|---|---|---|
| Richesse en dextrose (% en poids) | 99,5 | 99,5 |
| Teneur en forme cristalline α (%) | 98 | 98 |
| Teneur en eau (%) | 8,9 | 0,5 |
| Vitesse de dissolution dans l'eau (s) | <6 | 6 |
| Densité apparente (g/ml) | 0,5 | 0,61 |
| Diamètre moyen (µm) | 60 | 170 |
| Note d'écoulement (valeur/100) | 43 | 72 |
| Compressibilité (N) | < 50 | 136 |
| Friabilité (%) | nd | 69 |

### EXEMPLE 2.

On alimente un mélangeur-granulateur FLEXOMIX vertical SCHUGI en continu de la même manière que dans l'exemple 1.

La poudre granulée humide d'une teneur en eau égale à 9% en sortie du mélangeur-granulateur tombe en continu, par gravité, dans un séchoir à lit fluidisé SCHUGI à deux compartiments.

Dans le premier compartiment, le produit granulé est séché par de l'air à 12°C, puis il est refroidi par de l'air à 20°C dans le deuxième compartiment de manière à être amené à une teneur en eau de 7%.

Il est ensuite séché dans une étuve sous vide à une température de 105°C sous une pression de 80 milliBars et refroidi à une température de 20°C pour être finalement amené à une teneur en eau de 0,5%.

Le produit granulé, séché et refroidi est ensuite tamisé en continu sur un tamis rotatif équipé de deux toiles métalliques de 120 et 600µm.

Le dextrose poudre de départ C et le dextrose pulvérulent D ainsi obtenu conforme à l'invention présentent les caractéristiques rassemblées dans le tableau II suivant.

**TABLEAU II**

| **Paramètres** | **C** | **D** |
|---|---|---|
| Richesse en dextrose (% en poids) | 99 | 99,5 |
| Teneur en forme cristalline α (%) | 98 | 98 |
| Teneur en eau (%) | 0 | 0,5 |
| Vitesse de dissolution dans l'eau (s) | > 6 | 6 |
| Densité apparente (g/ml) | 0.53 | 0,6 |
| Diamètre moyen (m) | 60 | 170 |
| Note d'écoulement (valeur / 100) | 43 | 75 |
| Compressibilité (N) | > 50 | 147 |
| Friabilité (%) | > 50 | 70 |

### EXEMPLE 3.

On conduit le procédé avec le même dextrose poudre de départ A qui a été mis en oeuvre dans l'exemple 1.

Une tour d'atomisation MSD de 350 kg/h de capacité d'évaporation est alimentée avec le sorbitol poudre A à raison de 460 kg/h.

La granulation à l'eau est réalisée en pulvérisant de l'eau à raison de 100 l/h par une buse à 45 bars de pression.

L'air de séchage entre à 230°C et ressort à 83°C et la température des buées est déterminée à 95°C. Le lit statique en bas de la tour est refroidi par de l'air à 74°C.

En sortie de la tour d'atomisation, le produit passe sur un lit fluide vibré où il est refroidi par de l'air en trois zones de température fixées respectivement à 40°C, 20°C et 20°C.

Le produit de départ A et le produit ainsi obtenu E présentent les caractéristiques rassemblées dans le tableau III suivant :

**TABLEAU III**

| **Paramètres** | **A** | **E** |
|---|---|---|
| Richesse en dextrose (% en poids) | 99.5 | 99,5 |
| Teneur en forme cristalline α (%) | 98 | 98 |
| Teneur en eau (%) | 8,9 | 0.5 |
| Vitesse de dissolution dans l'eau (s) | < 6 | 6 |
| Densité apparente (g/ml) | 0.5 | 0,62 |
| Diamètre moyen (m) | 60 | 180 |
| Note d'écoulement (valeur / 100) | 43 | 70 |
| Compressibilité (N) | < 50 | 140 |
| Friabilité (%) | nd | 70 |

### EXEMPLE 4.

D'autres produits pulvérulents conformes à l'invention sont préparés en appliquant les procédés décrits dans les exemples 1 à 3, mais en modifiant les conditions de granulation de façon à obtenir une gamme d'échantillons.

Les produits obtenus présentent les caractéristiques énoncées dans le tableau IV ci-dessous, et sont comparés à des dextrose pulvérulents connus par ailleurs.

**Tableau IV**

| Paramètres | Produits conformes à l'invention | CERELOSE® Anhydre | Dry Dextrose Anhydrous SD 99 |
|---|---|---|---|
| Richesse en dextrose (% en poids) | > 99 | 95 | 98 |
| Teneur en maltose (%) | 0 | 0,2 | 1,2 |
| Teneur en maltotriose (%) | 0 | 0,1 | 0,1 |
| Teneur en forme cristalline α (%) | 95 - 100 | 96 | 67 |
| Teneur en eau (%) | < 1 | 0,2 | 1 |
| Teneur en forme α monohydrate (%) | 0 | 0 | 3 |
| Vitesse de dissolution dans l'eau (s) | < 10 | 27 | 22 |
| Densité apparente (g/ml) | 0,55 - 0,65 | 0,78 | 0,65 |
| Diamètre moyen (pm) | 150 - 200 | 150 - 250 | 450 - 550 |
| Note d'écoulement (valeur/100) | 70 - 80 | 62 | 77 |
| Compressibilité (N) | 100 - 200 | 0 | 122 |
| Friabilité (%) | 60 - 80 | 45 | 58 |

Les dextrose pulvérulents conformes à l'invention possèdent tous, contrairement aux produits de l'art antérieur, d'excellentes propriétés fonctionnelles, tant pour leur aptitude à l'écoulement, leur vitesse de dissolution, leur compressibilité et leur friabilité, et ce, pour de hautes richesse et pureté cristalline en forme a anhydre, les rendant aptes à être utilisés sans inconvénient dans les industries alimentaire et pharmaceutique.

### EXEMPLE 5.

Des tablettes de chocolat noir contenant ou non du dextrose pulvérulent B conforme à l'invention préparé selon l'exemple 1 sont fabriqués en suivant la recette donnée dans le tableau V suivant :

**TABLEAU V**

| **Ingrédients** | **Tablette (a)** | **Tablette (b)** |
|---|---|---|
| Saccharose | 467 g | 267 g |
| Dextrose pulvérulent B | - | 200 g |
| Liqueur de cacao à 54% de matières grasses | 450 g | 450 g |
| Beurre de cacao | 80 g | 80 g |
| Lécithine de soja | 3 g | 3 g |
| **TOTAL** | **1000 g** | **1000 g** |

Le mode de fabrication de ces tablettes consiste à:
- Tempérer toutes les matières premières à 45°C au bain-marie,
- Mélanger les matières sucrantes et la liqueur de cacao dans un mélangeur planétaire KENWOOD,
- Broyer ledit mélange sur un broyeur tri-cylindre GRENIER-CHARVET à raison de 3 passages à 20 bars,
- Ajouter à ce mélange broyé le beurre de cacao,
- Concher dans un bol double enveloppe, thermostaté à 80°C, équipé d'une pâte et animé par un bloc moteur HEIDOLPH, durant 24 h à 80°C,
- Ajouter la lécithine de soja 1 h avant la fin du conchage,
- Tempérer à 28,5°C et
- Mouler à la forme de tablettes.

Une analyse sensorielle est effectuée pour déterminer les paramètres de saveur sucrée et de texture en bouche des tablettes de chocolat noir ainsi obtenues.

Les résultats montrent que l'incorporation de 20% du dextrose anhydre pulvérulent dans cette formule de chocolats noirs à la place du saccharose ne modifie pas leurs propriétés organoleptiques.

La texture en bouche est identique à celle des chocolats fabriqués avec du saccharose. Aucune différence de viscosité n'est également constaté entre ces chocolats.

Le dextrose pulvérulent conforme à l'invention est donc bien adapté à cette application en chocolaterie.

## Revendications

1. Dextrose pulvérulent **caractérisé en ce qu'**il présente :
- une richesse en dextrose au moins égale à 99%,
- une teneur en forme cristalline α anhydre au moins égale à 95 %,
- une teneur en eau au plus égale à 1%,
- une compressibilité, déterminée selon un test A, au moins égale à 80 N, de préférence comprise entre 100 et 200 N.

2. Dextrose pulvérulent selon la revendication 1, **caractérisé en ce qu'**il présente une vitesse de dissolution dans l'eau inférieure à 10 s.

3. Dextrose pulvérulent selon l'une ou l'autre des revendications 1 et 2, **caractérisé en ce qu'**il présente :
- une densité apparente, déterminée selon HOSOKAWA, comprise entre 0,5 et 0,7 g/ml, de préférence comprise entre 0,55 et 0,65 g/ml,
- une friabilité au moins égale à 60, de préférence comprise entre 60 et 80.

4. Dextrose pulvérulent selon l'une quelconque des revendications 1 à 3, **caractérisé en ce qu'**il présente :
- un diamètre moyen compris entre 150 et 200 µm,
- une note d'écoulement au moins égale à 70, de préférence comprise entre 70 et 80.

5. Procédé de préparation d'un dextrose pulvérulent selon l'une quelconque des revendications 1 à 4, **caractérisé en ce qu'**il comprend une étape de granulation d'un dextrose poudre, de richesse élevée et de forme cristalline essentiellement α, à l'aide d'un liant, constitué d'eau ou d'un sirop de glucose, et une étape de maturation, par séchage, du dextrose granulé ainsi obtenu.

6. Procédé de préparation selon la revendication 5, **caractérisé en ce que** l'étape de granulation est réalisée dans un mélangeur-granulateur continu.

7. Procédé de préparation selon la revendication 5, **caractérisé en ce que** l'étape de granulation est réalisée dans une tour d'atomisation.

8. Utilisation d'un dextrose pulvérulent selon l'une quelconque des revendications 1 à 4 ou obtenu selon l'une quelconque des revendications 5 à 7 en tant qu'agent édulcorant ou excipient dans des compositions destinées, aux domaines alimentaire et pharmaceutique.

9. Utilisation d'un dextrose pulvérulent selon l'une quelconque des revendications 1 à 4 ou obtenu selon l'une quelconque des revendications 5 à 7 dans des compositions destinées, au secteur de la confiserie, notamment à celui de la chocolaterie.

10. Utilisation d'un dextrose pulvérulent selon l'une quelconque des revendications 1 à 4 ou obtenu selon l'une quelconque des revendications 5 à 7, pour la préparation de comprimés à sucer, à mâcher, à dissoudre ou à avaler.

## Claims

1. Dextrose in powder form **characterized in that** it has:
- a dextrose content at least equal to 99%,
- an anhydrous α crystalline form content at least equal to 95%,
- a water content at most equal to 1%,
- a compressibility, determined according to a test A, at least equal to 80 N, preferably between 100 N and 200 N.

2. Dextrose in powder form according to claim 1, **characterized in that** it has a rate of dissolution in water of less than 10 s.

3. Dextrose in powder form according to one or the other of the claims 1 and 2, **characterized in that** it has:
- an apparent density, determined according to HOSOKAWA, between 0.5 g/ml and 0.7 g/ml, preferably between 0.55 g/ml and 0.65 g/ml,
- a friability at least equal to 60, preferably between 60 and 80.

4. Dextrose in powder form according to any one of the claims 1 to 3, **characterized in that** it has:
- a mean diameter between 150 µm and 200 µm,
- a flow grade at least equal to 70, preferably between 70 and 80.

5. Process for the preparation of a dextrose in powder form according to any one of claims 1 to 4, **characterized in that** it comprises a step involving the granulation of a dextrose powder, of a high content and essentially in the α crystalline form, using a binder, composed of water or of a glucose syrup, and an ageing step by drying the granulated dextrose thus obtained.

6. Preparation process according to claim 5, **characterized in that** the granulation step is carried out in a continuous mixer-granulator.

7. Preparation process according to claim 5, **characterized in that** the granulation step is carried out in an atomisation tower.

8. Use of dextrose in powder form according to any one of the claims 1 to 4 or obtained according to any one of the claims 5 to 7, as a sweetener or excipient in compositions intended for the food and pharmaceutical sectors.

9. Use of dextrose in powder form according to any one of the claims 1 to 4 or obtained according to any one of the claims 5 to 7, in compositions intended for the confectionery sector, notably that of chocolate making.

10. Use of dextrose in powder form according to any one of the claims 1 to 4 or obtained according to any one of the claims 5 to 7, in the preparation of tablets to be sucked, chewed, dissolved or swallowed.

## Patentansprüche

1. Pulverförmige Dextrose, **dadurch gekennzeichnet, daß** sie
- einen Gehalt an Dextrose von mindestens gleich 99 %,
- einen Gehalt an wasserfreier kristalliner α-Form von mindestens gleich 95 %,
- einen Wassergehalt von höchstens gleich 1 %,
- eine nach einem Test A bestimmte Komprimierbarkeit von mindestens gleich 80 N und vorzugsweise zwischen 100 und 200 N besitzt.

2. Pulverförmige Dextrose nach Anspruch 1, **dadurch gekennzeichnet, daß** sie eine Auflösungsgeschwindigkeit in Wasser von weniger als 10 s besitzt.

3. Pulverförmige Dextrose nach einem der Ansprüche 1 und 2, **dadurch gekennzeichnet, daß** sie
- eine nach HOSOKAWA bestimmte scheinbare Dichte zwischen 0,5 und 0,7 g/ml, vorzugsweise zwischen 0,55 und 0,65 g/ml, und
- eine Brüchigkeit von mindestens gleich 60, vorzugsweise zwischen 60 und 80, besitzt.

4. Pulverförmige Dextrose nach einem der Ansprüche 1 bis 3, **dadurch gekennzeichnet, daß** sie
- einen mittleren Durchmesser zwischen 150 und 200 µm und
- einen Fließwert von mindestens gleich 70, vorzugsweise zwischen 70 und 80 besitzt.

5. Verfahren zur Herstellung von pulverförmiger Dextrose nach einem der Ansprüche 1 bis 4, **dadurch gekennzeichnet, daß** es einen Schritt der Granulierung von Dextrosepulver mit hohem Gehalt und im wesentlichen von der kristallinen α-Form mit Hilfe eines Bindemittels, das aus Wasser oder Glucosesirup besteht, und einen Schritt der Reifung der auf diese Weise erhaltenen granulierten Dextrose durch Trocknung umfaßt.

6. Herstellungsverfahren nach Anspruch 5, **dadurch gekennzeichnet, daß** der Granulierungsschritt in einem kontinuierlichen Granuliermischer durchgeführt wird.

7. Herstellungsverfahren nach Anspruch 5, **dadurch gekennzeichnet, daß** der Granulierungsschritt in einem Zerstäubungsturm durchgeführt wird.

8. Verwendung von pulverförmiger Dextrose nach einem der Ansprüche 1 bis 4 oder hergestellt gemäß einem der Ansprüche 5 bis 7, als Süßungsmittel oder als Trägersubstanz in Zusammensetzungen für den Nahrungsmittelbereich und den pharmazeutischen Bereich.

9. Verwendung von pulverförmiger Dextrose nach einem der Ansprüche 1 bis 4 oder hergestellt gemäß einem der Ansprüche 5 bis 7, in Zusammensetzungen für die Süßwarenherstellung, insbesondere Schokoladeherstellung.

10. Verwendung von pulverformiger Dextrose nach einem der Ansprüche 1 bis 4 oder hergestellt gemäß einem der Ansprüche 5 bis 7, für die Herstellung von zu lutschenden, zu zerkauenden, aufzulösenden oder zu schluckenden Tabletten.
